# EUROPEAN PATENT SPECIFICATION

(11) **EP 1 024 956 B1**
(45) Date of publication and mention of the grant of the patent: **10.12.2003**
(21) Application number: 98950196.0
(22) Date of filing: 27.10.1998
(51) Int. Cl.: B32B 27/42, E04C 2/296

(54) **BUILDING PANEL**
BAUPLATTE
PANNEAU DE CONSTRUCTION

(30) Priority: 29.10.1997 GB 9722874
(43) Date of publication of application: 09.08.2000
(73) Proprietor: Process Plastics Limited, Chadderton, Oldham O9L 9LL (GB)
(72) Inventor: CLOUGHLEY, John, Stockport Cheshire SK6 5ND (GB)
(74) Representative: Rackham, Stephen Neil
(86) International application number: GB9803202
(87) International publication number: WO99021712

(56) References cited:
- EP-A- 0 453 784
- EP-A- 0 686 494
- FR-A- 2 228 607
- GB-A- 2 235 486

## Description

### BACKGROUND OF THE INVENTION

Polyurethane and polystyrene foam-filled sandwich insulation panels are used as building elements within the construction industry. Foam-filled insulation panels of this type have steel facings and are often used, for example, to construct large food storage or preparation areas within existing buildings. These panel constructions have proven to be a major fire hazard in that in the event of a fire, the steel facings conceal degradation of the foam core as the fire spreads undetected. Thermal bowing caused by differential expansion between the steel facings eventually causes structural failure where the steel facings delaminate from the foam core, usually without any warning. Poor fire stability has caused loss of life on more than one occasion and has led some companies and insurers to refuse to use polyurethane or polystyrene filled insulation panels.

One suggested alternative are insulation panels made from high density mineral wool. However, mineral wool panels offer significantly poor resistance to moisture (a particular problem for chilled and refrigerated areas) and provide the added complication of introducing a source of fibres which needs to be strictly managed in a food processing environment.

It has also been proposed to use phenolic foams in this market because of their excellent fire resistant properties. However panels including such materials have not entered the market to date apparently as a result of the phenolic foams being high modulus materials and hence demonstrating a rigidity which does not accommodate the thermal movement of the steel facing sheets. Thus such panels have delaminated under normal usage conditions which has lead to their failure in the market place.

It has also been proposed in FR-A-2228607 to provide a panel having a foam core and a plastics skin. Among the materials mentioned for the core is a phenolic foam and amongst those for the skin is a polyester material. However, this document does not discuss fire resistance or the use of such panels in such a situation.

EP-A-0686494 describes a panel having a core made from a thermosetting material with facing sheets made of glass fibre mat reinforced thermoplastic such as a polyester.

US-A-5001005 describes a facing material useful in the manufacture of structural laminates that will not allow any leakage through it of foam-forming liquid thermosetting resin during the preparation of the structural laminates.

### SUMMARY OF THE INVENTION

According to the present invention, a laminated building panel comprises a foamed phenolic-resin based core sandwiched between sheets of polyester or polycarbonate based flame resistant thermoplastics material.

In the present invention a phenolic-resin based foam-filled building panel is faced with a fire resistant polyester or polycarbonate-based thermoplastics material. The use of a fire resistant thermoplastics material to provide fire protection to the foam core overcomes the existing problem of differential expansion and resultant delamination associated with steel facings and phenolic foam and prevents the undetected spread of fire via the core of such panels. Accordingly, the building panel of the present invention provides a very much improved fire stability. The building panel is also much lighter than steel-faced panels.

Preferably the building panel is faced with a thermoplastic polyester. Preferably the thermoplastic polyester is derived from terephthalic acid. It may be a crystalline or an amorphous polyethylene terephthalate (PET) such as that sold under the trade mark "Hostaglas" by Hoechst AG, or PETG. This material has a British Standards Class 1 and B1 DIN flame spread rating in the United Kingdom and meets a number of international food contact requirements. Alternatively the thermoplastic polyester may be another type of polyalkylene terephthalate such as PTT (poly-trimethylene terephthalate). It may also be PEN (polyethylene naphthalate).

The thermoplastic sheets may have glass fibre reinforcement embedded within them. This increases the stability of the sheet, particularly at high temperatures.

The thermoplastic sheets may be bonded directly to the foamed phenolic core. Alternatively, a layer of glass tissue or glass mat may be interposed between the foamed polymer core and at least one of the thermoplastic sheets to improve facing adhesion and also to provide an additional barrier to flame penetration, thereby making the fire resistance of the panel comparable with that of steel faced insulation panels. The glass tissue or glass mat may be applied onto a pre-formed thermoplastics sheet by heating the thermoplastics sheet to soften its surface. The thermoplastics sheets may be flat or may be thermoformed to apply a pattern to their surface. This pattern may be functional but is more likely to be provided solely as decoration.

As mentioned above, the foamed polymer core is a phenolic foam. Phenolic foam provides an improved alternative to existing polyurethane and polystyrene cores because of its inherent fire and smoke performance. Preferably, the foamed phenolic core is a rigid foam. However a resilient phenolic foam particularly one based on Blagden Chemicals Celobond (RTM) phenolic resins may be used. This provides a less rigid foam at the foam/facing interface and this can be an advantage.

The building panel may be manufactured over a number of stages. For example, the foamed phenolic core may be extruded, expanded or fabricated into panels of the required size with the thermoplastics sheets made separately and applied later. Heat may be used to bond the thermoplastics sheets to the foamed phenolic core or a commercial adhesive may be used. As an alternative, the thermoplastics sheets may be made first and the foamed phenolic core formed in situ by injecting material between the sheets as part of a continuous or discontinuous production process.

### BRIEF DESCRIPTION OF THE DRAWINGS

An example of the present invention will now be described with reference to the accompanying drawings, in which:
Figure 1 shows a laminated building panel in accordance with the present invention;
Figure 2 shows a cross-section of the building panel of Figure 1 taken along the line A-A;
Figure 3 shows a building constructed from a number of the panels of Figure 1.

### DESCRIPTION OF PREFERRED EMBODIMENT

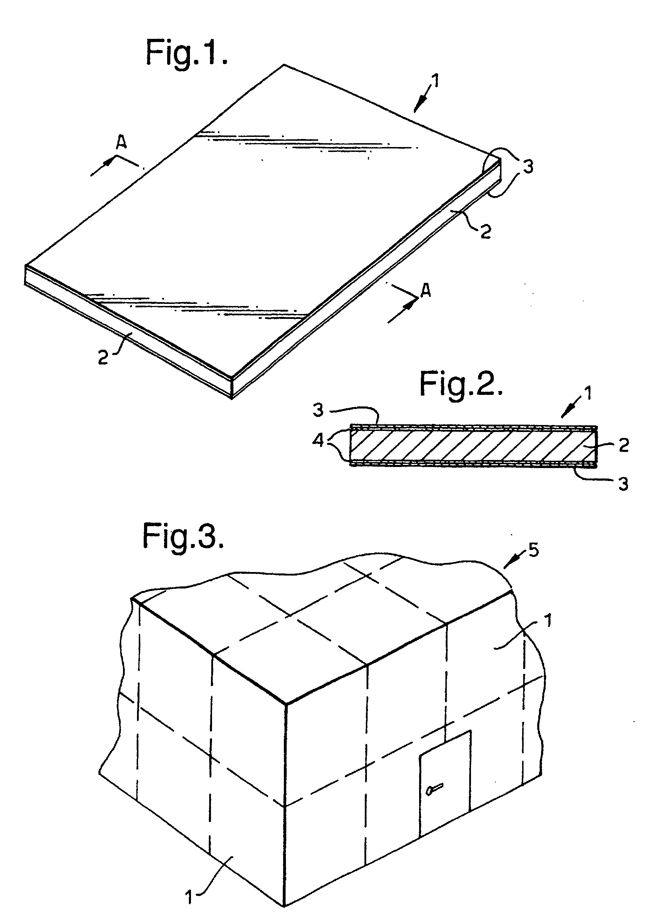

Figure 1 shows a laminated building panel 1 which comprises a phenolic foam core 2 and sheets 3 of a Class 1 flame spread (United Kingdom BS476 Part 7:1997) fire resistant thermoplastics material sold under the trade name Hostaglas by Hoechst AG. A cross-section of the panel 1 is shown in Figure 2. A layer of glass tissue 4 is interposed between the foam core 2 and the thermoplastic sheets 3 to provide an additional barrier to flame penetration i.e. to improve flame resistance. Typically, the thermoplastics sheets 3 have a thickness of up to 3mm, and more usually less than 1mm. The overall thickness of the panel 1 is between 50mm and 200mm.

The panel 1 is formed by injecting the plastics foam material using a withdrawing lance between preformed thermoplastics sheets to which the glass tissue has already been applied. The thermoplastics sheets 3 are held facing each other and are separated by a predetermined distance corresponding to the required depth of the phenolic foam core 2. As the phenolic foam cures it bonds to the glass tissue layers 4 and to the inner surface of the thermoplastics sheets 3.

Figure 3 shows an example of a building 5 constructed from the panels 1. Typically, this structure would be erected in an existing building to provide a large and well insulated cold storage area for a food processing plant.

The present invention is further illustrated by way of the following Example.

### Example

Phenolic foam composite panels were manufactured to a size of 600 mm x 600 mm x 70 mm using traditional injection foaming techniques. The facings utilised on the panels were thermoplastic in nature, being made of polyethylene terephthalate (PET). As polyethylene terephthalate can exist in both amorphous and crystalline states, panels were made with both types of material. In addition, glass reinforcement was impressed behind the facing materials in selected panels to improve primary adhesion and assist in providing better fire resistance.

Three sets of panels were made from each combination (four combinations in all): one for physical testing; one for fire testing; and the third as a reference. Physical tests revealed that the foams produced were satisfactory in terms of compressive strength and density. Adhesion was also found to be adequate with failure generally occurring in the body of the foam rather than at the interface of the foam and facing. Fire tests were particularly encouraging with all samples submitted passing the one hour insulation criterion of BS476 Pt. 20: 1987.

The results of physical testing are summarised as follows:

| **Property (Mean Values)** | **Amorphous (No Glass)** | **Amorphous (Glass)** | **Crystalline (No Glass)** | **Crystalline (Glass)** |
|---|---|---|---|---|
| Compr.Strength | 155 | 231 | 212 | 200 |
| Density (kg/m³) | 59 | 56 | 56 | 59 |
| Strength/Density Ratio | 2.63 | 4.13 | 3.79 | 3.39 |
| Tensile Adhesion | 126 | 160 | 113 | 95 |
| Adhesion/Strength | 0.81 | 0.69* | 0.53 | 0.48 |

| | | | | |
|---|---|---|---|---|
| * Failure observed in foam core, not at surface | | | | |

The test methods used were as follows:

| | |
|---|---|
| Compressive Strength | BS 4370 Method 3 |
| Direct Tensile Adhesion | BS EN 1607 |
| Core Density | BS EN 845 |

## Claims

1. A laminated building panel (1) comprising a foamed phenolic-resin based core (2) sandwiched between sheets (3) made of polyester or polycarbonate-based flame resistant thermoplastics material.

2. A panel according to claim 1 in which the core (2) is sandwiched between sheets of thermoplastic polyester.

3. A panel according to claim 2, in which the thermoplastics polyester is derived from terephthalic acid.

4. A panel according to claim 3 in which the thermoplastic polyester is a polyalkylene terephthalate.

5. A panel according to claim 3, in which the thermoplastic polyester is a crystalline or an amorphous polyethylene terephthalate.

6. A panel according to any one of the preceding claims, in which at least one of the sheets (3) include glass fibre reinforcement embedded within it.

7. A panel according to any one of the preceding claims, in which the thermoplastics sheets (3) are bonded directly to the foamed phenolic-resin core (2).

8. A panel according to any one of claims 1 to 6, in which a layer of glass tissue or glass mat (4) is interposed between the foamed phenolic-resin core (2) and at least one of the thermoplastic sheets (3).

9. A panel according to any of the preceding claims, in which the foamed phenolic-resin core (2) is a rigid foam.

## Patentansprüche

1. Laminierte Bauplatte(1) mit einem zwischen aus polyester- oder polycarbonatbasierendem, flammfesten Thermoplastmaterial gebildeten Lagen (3) gelegten, geschäumten, phenolharzbasierenden Kern (2).

2. Platte nach Anspruch 1, **dadurch gekennzeichnet, daß** der Kern (2) zwischen Lagen aus thermoplastischem Polyester gelegt ist.

3. Platte nach Anspruch 2, **dadurch gekennzeichnet, daß** der thermoplastische Polyester aus Terephthalsäure abstammt.

4. Platte nach Anspruch 3, **dadurch gekennzeichnet, daß** der thermoplastische Polyester ein Polyalkylenterephthalat ist.

5. Platte nach Anspruch 3, **dadurch gekennzeichnet, daß** der thermoplastische Polyester ein kristallines oder amorphes Polyethylenterephthalat ist.

6. Platte nach einem der vorhergehenden Ansprüche, **dadurch gekennzeichnet, daß** wenigstens eine der Lagen (3) eine in dieser eingebettete Glasfaserverstärkung enthält.

7. Platte nach einem der vorhergehenden Ansprüche, **dadurch gekennzeichnet, daß** die thermoplastischen Lagen (3) direkt auf dem geschäumten Phenolharzkern verankert sind.

8. Platte nach einem der Ansprüche 1 bis 6, **dadurch gekennzeichnet, daß** eine Schicht aus Glasgewebe oder aus einer Glasmatte (4) zwischen den geschäumten Phenolharzkern (2) und wenigstens eine der thermoplastischen Lagen (3) zwischengelegt ist.

9. Platte nach einem der vorhergehenden Ansprüche, **dadurch gekennzeichnet, daß** der geschäumte Phenolharzkern (2) ein Hartschaum ist.

## Revendications

1. Panneau de construction laminé (1) comprenant un noyau à base de résine phénolique expansée (2) placé en sandwich entre deux feuilles (3) faites de matériau thermoplastique ignifuge à base de polyester ou de polycarbonate.

2. Panneau selon la revendication 1, dans lequel le noyau (2) est pris en sandwich entre des feuilles de polyester thermoplastique.

3. Panneau selon la revendication 2, dans lequel le polyester thermoplastique est dérivé de l'acide téréphtalique.

4. Panneau selon la revendication 3, dans lequel le polyester thermoplastique est un téréphtalate de polyalkylène.

5. Panneau selon la revendication 3, dans lequel le polyester thermoplastique est un téréphtalate de polyéthylène cristallin ou amorphe.

6. Panneau selon l'une quelconque des revendications précédentes, dans lequel au moins une des feuilles (3) comprend un renfort de fibre de verre incorporé à l'intérieur.

7. Panneau selon l'une quelconque des revendications précédentes, dans lequel les feuilles thermoplastiques (3) sont liées directement au noyau de résine phénolique expansée (2).

8. Panneau selon l'une quelconque des revendications 1 à 6, dans lequel une couche de tissu de verre ou de mat de verre (4) est interposé entre le noyau de résine phénolique expansée (2) et au moins une des feuilles thermoplastiques (3).

9. Panneau selon l'une quelconques des revendications précédentes, dans lequel le noyau de résine phénolique expansée (2) est une mousse rigide.
